Europäisches Patentamt

European Patent Office

Office européen des brevets

(19)

(11) **EP 1 315 390 A1**

(12) ## EUROPEAN PATENT APPLICATION

(43) Date of publication:
    **28.05.2003 Bulletin 2003/22**

(51) Int Cl.⁷: **H04Q 7/38**

(21) Application number: **02026349.7**

(22) Date of filing: **22.11.2002**

(84) Designated Contracting States:
    **AT BE BG CH CY CZ DE DK EE ES FI FR GB GR
    IE IT LI LU MC NL PT SE SK TR**
    Designated Extension States:
    **AL LT LV MK RO SI**

(30) Priority: **22.11.2001 KR 2001073141**

(71) Applicant: **SAMSUNG ELECTRONICS CO. LTD.
    Suwon, Kyungki-do (KR)**

(72) Inventors:
    • **KIM, Gae-Gyun
       Pundang-gu, Sungnam-shi, Kyonggi-do (KR)**
    • **RAJKOTIA, Purva
       111 Plano, Texas 75074 (US)**

(74) Representative: **Lang, Johannes, Dipl.-Ing. et al
    Bardehle Pagenberg Dost Altenburg Geissler
    Isenbruck,
    Postfach 86 06 20
    81633 München (DE)**

(54) **Method and apparatus for adaptive location registration in a mobile communication system**

(57)    A method and apparatus for adaptive location registration in an MS is disclosed. If a received signal strength is relatively great, the MS increases its location registration period, and if the received signal strength is relatively small, it decreases its location registration period. If the MS moves relatively fast, it decreases its location registration period, and if it moves relatively slow, it increases its location registration period. If the MS moves fast and a signal strength variance is great, the MS registers its location before the location registration period expires. Therefore, unnecessary registration message transmission is reduced and cell capacity waste is minimized. The adaptive location registration is effective especially in a broadcasting service requiring periodic location registration.

FIG.5

EP 1 315 390 A1

## Description

### PRIORITY

This application claims priority to an application entitled "Method and Apparatus for Adaptive Location Registration in Mobile Station" filed in the Korean Industrial Property Office on November 22, 2001 and assigned Serial No. 2001-73141, the contents of which are hereby incorporated by reference.

### BACKGROUND OF THE INVENTION

#### 1. Field of the Invention

The present invention relates generally to a high-speed mobile communication system, and in particular, to a method and apparatus for registering location of a mobile station (MS) to a mobile communication system.

#### 2. Description of the Related Art

Communication technology has developed so drastically such that in the future communication environment, there may be no distinction between wired and wireless communications and communications across different nations. In particular, IMT-2000 (International Mobile Telecommunication-2000) will allow a variety of information including pictures and voice to be provided contemporaneously to users in real time. In the current mobile communication developmental stage, users can even be provided with broadcast services wirelessly through a mobile terminal such as a cellular phone or a PCS (Personal Communication System) phone.

The present 3GPP2 (3rd Generation Partnership Project 2) considers broadcasting service in a mobile communication system through various service media and efficient use of resources. The broadcasting service is implemented by delivering high-speed forward data to an MS without feedback information from the MS. This is similar to the existing TV (Television) broadcasting service in concept.

However, if an existing common channel is so configured that the same broadcasting service performance is ensured even at a cell boundary, excess cell capacity is wasted. To alleviate this waste, the 3rd generation mobile communication system provides broadcasting service via a supplemental channel (SCH), which was proposed for packet data service, to reduce power consumption in a base station (BS), thereby ensuring an acceptable performance.

While the SCH is a dedicated channel using a long code mask for a particular user, it is modified to use a common long code mask for the broadcasting service. The modified SCH ensures at least equal or higher performance level of a conventional common channel by supporting autonomous handoff and outer coding that obviate feedback from an MS during the broadcasting service. Furthermore, since the MS does not need to transmit power control information and feedback information, cell capacity which otherwise might be consumed by reverse dedicated channels is saved and one cell can accommodate infinite MSs theoretically.

Meanwhile, an MS must register its location periodically or nonperiodically in the mobile communication system. As known, the MS performs a location registration in predetermined cases, for example, when it enters a new region or power is initially turned on. A subscriber database known as an HLR (Home Location Register) manages mobile location information for requesting termination of an incoming voice call, paging an MS, and performing general location management, for example.

In a broadcasting service, there is no particular procedure for service termination. Unless the MS registers periodically, the broadcasting service is automatically terminated. Thus the location registration is a requisite for service termination. In addition, the registration information is provided to a contents server for billing, and for information regarding indications of a broadcasting service in progress and indications of a requested broadcasting service.

Generally the MS registers its location during the broadcasting service every time it is tuned to a new service frequency or a registration period expires. For the broadcasting service, a BS (base station) tells the MS a timer value (i.e., a location registration period) by which a location registration is carried out periodically. The registration period is, for example, between 1 and 10 minutes.

The location registration period is fixed irrespective of the channel environment and movement of the MS. Even when it does not roam or it is near the BS, the MS unnecessarily registers its location in the fixed period. The resulting unnecessary transmission of a reverse message (e.g., Registration message) adds to the load of the MS. Therefore, there is a need for a method of preventing the unnecessary location registration of an MS.

### SUMMARY OF THE INVENTION

It is, therefore, an object of the present invention to provide a method and apparatus for preventing an MS from registering its location unnecessarily.

It is another object of the present invention to provide a method and apparatus for adaptive location registration in an MS.

It is a further object of the present invention to provide a method and apparatus for adaptively controlling a location registration period for an MS during a broadcasting service.

It is still another object of the present invention to provide a method and apparatus for controlling a location registration period for an MS adaptively according to the received signal strength and velocity of the MS.

To achieve the above and other objects, according to one aspect of the present invention, in a periodic location registering method for an MS, the strength of a signal received from a BS is measured and compared with at least one predetermined threshold. According to the comparison result, the location registration period of the MS is controlled. According to the location registration period, the MS performs the location registration. In a periodic location registering apparatus for the MS, a signal strength measurer measures the strength of a signal received from the BS, a period controller compares the signal strength measurement with at least one predetermined threshold and controls a location registration period according to the comparison result, and a controller registers the location of the MS to a mobile communication system according to the location registration period.

According to another aspect of the present invention, in a periodic location registering method for an MS, the velocity of the MS is measured and compares the velocity measurement with at least one predetermined threshold. The location registration period of the MS is controlled according to the comparison result. According to the location registration period, the MS performs the location registration. In a periodic location registering apparatus for the MS, a velocity measurer measures the velocity of the MS, a period controller compares the velocity measurement with at least one predetermined threshold and controls a location registration period according to the comparison result, and a controller registers the location of the MS to a mobile communication system according to the location registration period.

According to a further aspect of the present invention, in a location registering method for an MS, the strength of a signal received from the BS is repeatedly measured for a predetermined time period and the variance of signal strengths measured for the time period is calculated. The velocity of the MS is measured. If the velocity measurement is greater than a predetermined threshold velocity and the variance is greater than a predetermined threshold variance, the location of the MS is registered to a mobile communication system. In a location registering apparatus for the MS, a signal strength measurer repeatedly measures the strength of a signal from the BS for a predetermined time period and calculates the variance of signal strengths measured for the time period, a velocity measurer measures the velocity of the MS, and a controller registers the location of the MS to the mobile communication system if the velocity measurement is greater than a predetermined threshold velocity and the variance is greater than a predetermined threshold variance.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram of an MS according to the present invention in one embodiment;
FIG. 2 illustrates a format of a BSPM (Broadcast Service Parameter Message) received at the MS from a BS;
FIG. 3 is a flowchart illustrating a location registration according to the received signal strength of the MS according to an embodiment of the present invention;
FIG. 4 is a flowchart illustrating a location registration according to the velocity of the MS according to another embodiment of the present invention; and
FIG. 5 is a flowchart illustrating a location registration according to the received signal strength and velocity of the MS according to a third embodiment of the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

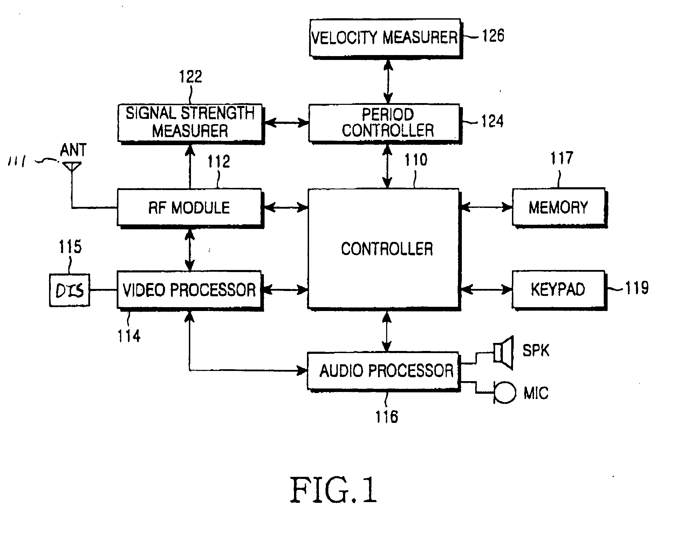

FIG. 1 is a block diagram of an MS according to the present invention in one embodiment. Referring to FIG. 1, a controller 110 provides overall control to the MS. A memory 117 includes a program memory, a data memory, and a non-volatile memory. The program memory may be a ROM (Read Only Memory) for storing a program for controlling the whole operation of the MS. The data memory may be a RAM (Random Access Memory) for temporarily storing data generated during the operation of the MS. The non-volatile memory may be an EEPROM (Electrically Erasable Programmable Read Only Memory) for storing telephone numbers registered for user-friendly functions such as short dialing, and system parameters.

A keypad 119 generates command key signals and data input key signals and feeds the key signals to the controller 110 for controlling the operation of the controller 110. A display 115 displays key signals and information received from the keypad 119 and the controller 110, especially status information under the control of the controller 110.

An RF (Radio Frequency) module 112 downconverts an RF signal received through an antenna (ANT) 111and outputs audio and video data in conformance with a TV channel after baseband filtering, PN (Pseudo Noise) despreading, Walsh despreading, and deinterleaving, decoding of the downconverted signal.

A video processor 114, connected to the display 115, displays the video data on the display (DIS) 115 after performing a predetermined processing. An audio processor 116, connected to a speaker (SPK) and a microphone (MIC), converts the audio data to an analog voice signal, outputs it to the speaker, and processes a voice signal received through the microphone.

To control a location registration period for adaptive location registration according to the present invention in one embodiment, the MS further includes a period controller 124 and other devices for example, a velocity measurer 126 and a signal strength measurer 112 that provide the period controller 124 with radio channel environment information required to control the location registration period.

A signal strength measurer 122 measures the strength of a pilot channel signal received through the RF module 112. The signal strength is a carrier to interference ratio (C/I) expressed as $E_c/I_o$, a criterion by which the radio channel condition of the MS is determined.

A velocity measurer 126 measures the velocity of the MS in a known manner. For example, the velocity can be calculated by tracking the position of the MS that varies with time. A GPS (Global Positioning System) device equipped in the MS is used to estimate its position, or the distances between the MS and neighboring BSs are calculated and a relative position of the MS to the neighboring BSs is calculated from the distances by triangulation.

The period controller 124 controls the location registration period of the MS using one of the measurements received from the signal strength measurer 122 and the velocity measurer 126. While the MS shown in FIG. 1 includes both the signal strength measurer 122 and the velocity measurer 126, it need not include both. That is, the MS may have either the signal strength measurer 122 or the velocity measurer 126 depending on which measurement is used for controlling the location registration period.

A controlled location registration period is stored in the memory 117 under the control of the controller 110 for location registration. Specifically, the controller 110 transmits a Registration message in a predetermined format to a BS by an RF signal in the location registration period controlled by the period controller 124. The Registration message contains the ID (Identification) of the MS. The BS then registers the ID of the MS along with its ID in an HLR through an MSC (Mobile Switching Center). The registration information in the HLR is used for paging the MS.

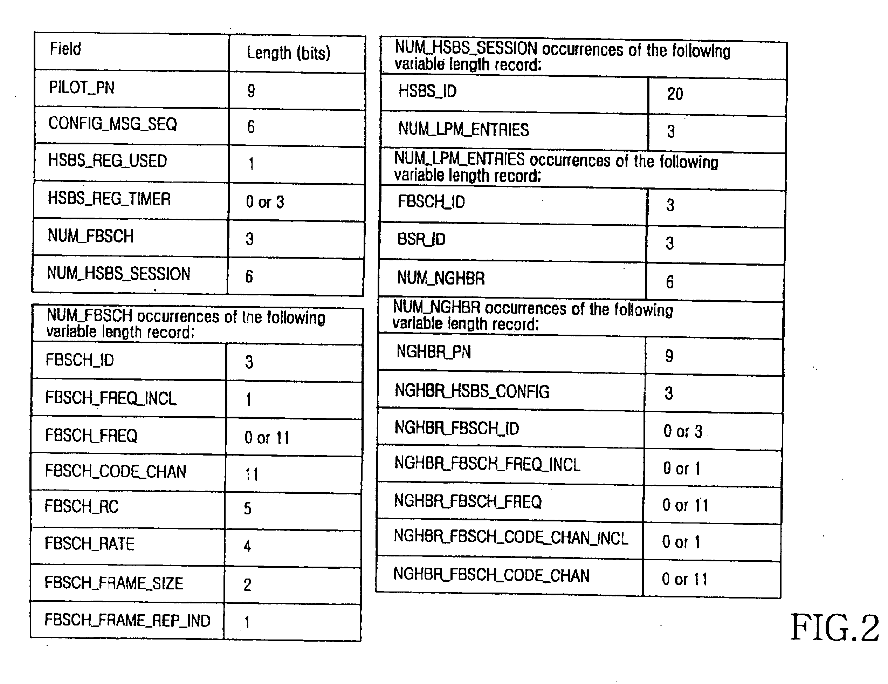

In a broadcasting service, the MS obtains information about an initial location registration period from broadcasting service overhead information received from the BS. That is, the MS receives the broadcasting service overhead information from the BS on an initially tuned frequency channel by a BSPM. The format of the BSPM is illustrated in FIG. 2.

Referring to FIG. 2, major fields of the BSPM will be described. HSBS_REG_USED indicates whether location registration is carried out for HSBS (High Speed Broadcast Service) and HSBS_REG_TIMER indicates a location registration period if location registration is carried out.

PILOT_PN indicates the PN code offset of a BS that provides the broadcasting service and FBSCH_FREQ (Forward Broadcast Supplemental Channel_Frequency) is a field that sets a broadcast service frequency. The MS detects a frequency for each service from the FBSCH_FREQ field, and transits to a corresponding frequency. FBSCH_CODE_CHAN provides information about the code of a physical channel and FBSCH_RATE indicates the data rate of the physical channel.

HSBS_ID (High Speed Broadcast Service_Index) indicates the type of a service provided between the MS and a server. FBSCH_ID is the index of the physical channel and BSR_ID (Broadcast Service Reference_Index) is a logical identifier identifying the contents of the service. The MS determines mapping between logical information and the physical channel and finds out what service is provided on the physical channel.

NGHBR (Neighbor)-related fields provide information about neighbor cells. The NGHBR information tells the MS whether a handoff can occur and the code and data rate of an FBSCH in order to allow the MS to implement a handoff to a neighbor cell. Particularly at an autonomous handoff, the MS acquires information about neighbor cells by the BSPM and combines signals received from corresponding neighbor cells, thereby improving reception performance.

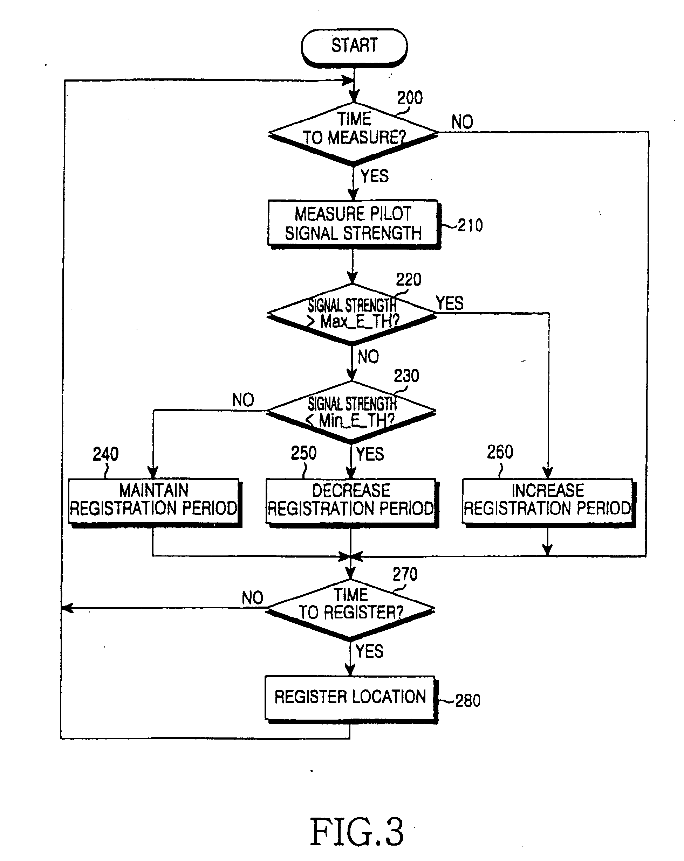

FIG. 3 is a flowchart illustrating an adaptive location registration in an MS according to an embodiment of the present invention. The location registration period of the MS is controlled according to the signal strength of a pilot channel measured in the signal strength measurer 122. In this case, the velocity measurer 126 is not required.

Referring to FIG. 3, the signal strength measurer 122 determines whether a predetermined measurement period has expired in step 200. If it has not, the procedure goes to step 270. If it has, the signal strength measurer 122 measures the C/I of a pilot channel signal received at the RF module 112 from a BS and feeds the C/I measurement to the period controller 124 in step 210.

In step 220, the period controller 124 compares the C/I measurement with a predetermined maximum threshold strength (Max_E_TH). If the C/I measurement is greater than the maxim threshold strength, which implies that the radio channel condition of the MS is good, the period controller 124 increases the location registration period by a predetermined value k in step 260. Let a location registration period in a measuring period t be T_Val(t). Then a location registration period T_Val(t+1) in the next measuring period (t+1) is expressed as

$$T\_Val(t+1)=T\_Val(t)+k \qquad (1)$$

On the other hand, if the C/I measurement is equal to or less than the maximum threshold strength, the period controller 124 compares the C/I measurement with a predetermined minimum threshold strength (Min_E_TH) in step 230. Here, Min_E_TH < MAX_E_TH. If the C/I measurement is less than the minimum threshold strength, which implies that the radio channel condition of the MS is bad and thus location registration must be performed more frequently, the period controller 124 decreases the location registration period by k in step 250. Hence,

$$T\_Val(t+1)=T\_Val(t)-k \qquad (2)$$

If the C/I measurement is equal to or greater than the minimum threshold strength, the period controller 124 maintains the location registration period in step 240 (T_Val(t+1)= T_Val(t)). The parameters Max_E_TH, Min_E_TH, and k are empirical values in the actual radio channel environment, which are generated in the MS or set by the BS. Here, although it is described that a value increasing a location registration period is equal to a value decreasing the location registration period, the above two values may be different from each other in the modified embodiment of the present invention.

The period controller 124 stores the controlled location registration period as a new location registration period (HSBS_REG_TIMER) in the memory 117. In step 270, the controller 110 sets a location registration timer to the controlled location registration period. If the timer expires, the controller 110 transmits a Registration message to the BS, for location registration, in step 280.

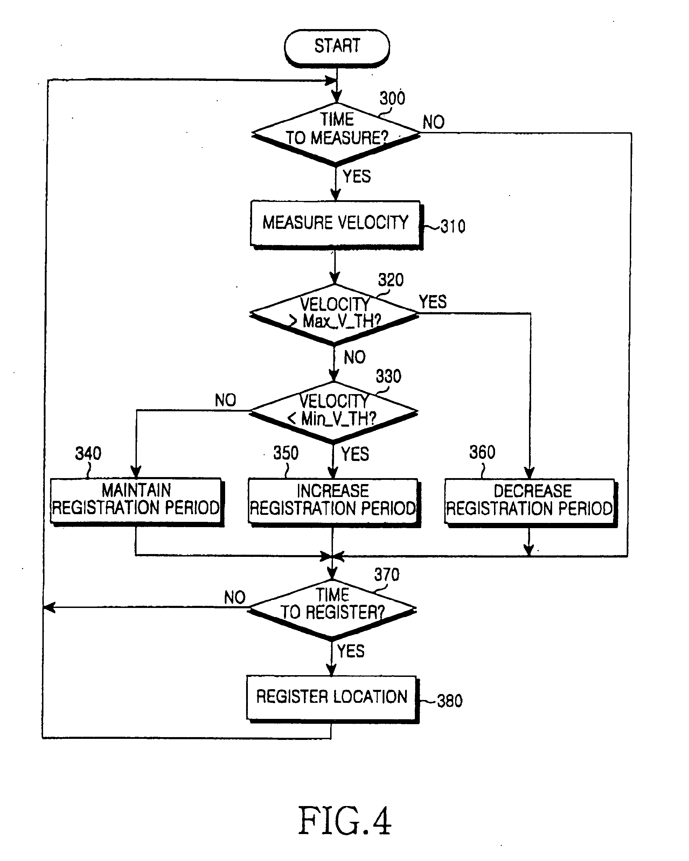

FIG. 4 is a flowchart illustrating an adaptive location registration in an MS according to another embodiment of the present invention. The location registration period of the MS is controlled according to its velocity measured in the velocity measurer 126. In this case, the signal strength measurer 122 is not required.

Referring to FIG. 4, the velocity measurer 126 determines whether a predetermined measurement period has expired in step 300. If it has not, the procedure goes to step 370. If it has, the velocity measurer 126 measures the current velocity of the MS in a known manner, for example, by tracking changes in the position of the MS, and feeds the velocity measurement to the period controller 124 in step 310.

In step 320, the period controller 124 compares the velocity measurement with a predetermined maximum threshold velocity (Max_V_TH). If the velocity measurement is greater than the maximum threshold velocity, which implies that the MS is highly likely to enter the service area of another BS, the period controller 124 decreases the location registration period by the predetermined value k in step 360 (T_Val(t+1)=T_Val(t)-k).

On the other hand, if the velocity measurement is equal to or less than the maximum threshold velocity, the period controller 124 compares the velocity measurement with a predetermined minimum threshold velocity (Min_V_TH) in step 330. If the velocity measurement is less than the minimum threshold velocity, which implies that the MS is not likely to enter the service area of another BS, the period controller 124 increases the location registration period by k in step 350 (T_Val(t+1) =T_Val(t)+k).

If the velocity measurement is equal to or greater than the minimum threshold velocity, the period controller 124 maintains the location registration period in step 340 (T_Val(t+1) = T_Val(t)). The parameters Max_V_TH, Min_V_TH, and k are empirical values in the actual radio channel environment, which are generated in the MS or set by the BS. As described above, a value increasing a location registration period may be different from a value decreasing the location registration period in the modified embodiment of the present invention.

The period controller 124 stores the controlled location registration period as a new location registration period (HSBS_REG_TIMER) in the memory 117. In step 370, the controller 110 sets the location registration timer to the controlled location registration period. If the timer expires, the controller 110 transmits a Registration message to the BS, for location registration, in step 380.

In cases where the MS moves very fast, but the distance between the MS and the BS does not change much and thus the radio channel environment does not change much, the MS need not register its location frequently. For these cases, a third embodiment of the present invention is contemplated by utilizing the variance of received signal strengths and the velocity of the MS to provide more accurate location registration.

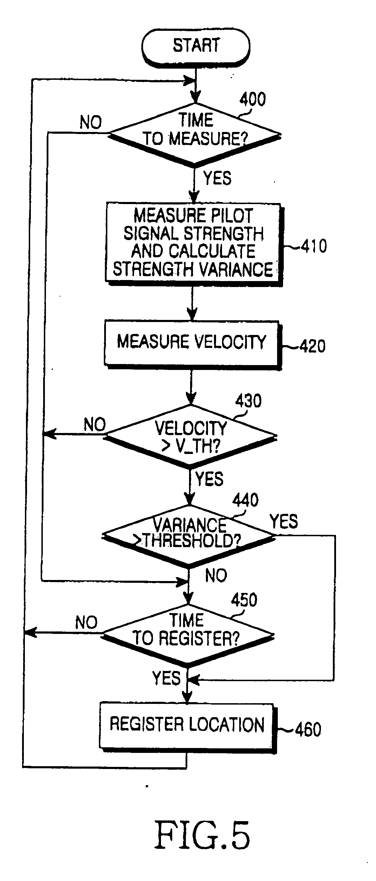

FIG. 5 is a flowchart illustrating an adaptive location registration in an MS according to a third embodiment of the present invention. The location registration of the MS is carried out according to the received signal strength of a pilot channel measured in the signal strength measurer 122 and a velocity measured in the velocity measurer 126, without controlling a location registration period. If predetermined conditions are satisfied, the MS registers its location even before the location registration period expires. Therefore, the period controller 124 is not required.

Referring to FIG. 5, if a predetermined measurement period has expired in step 400, the signal strength measurer 122 measures the C/I of a pilot channel received at the RF module 112 from a BS and calculates a signal strength variance from pilot C/I measurements for a predetermined time period in step 410. The velocity measurer 126 measures the current velocity of the MS in step 420. The signal strength variance and the velocity measurement are fed to the controller 110.

In step 430, the controller 110 compares the velocity measurement with a predetermined threshold velocity (V_TH). If the velocity measurement is equal to or less than the threshold velocity, the procedure goes to step 450. If the velocity measurement is greater than the threshold velocity, the controller 110 compares the variance with a threshold variance in step 440. If the variance is equal to or less than the threshold variance, the procedure goes to step 450. On the other hand, if the variance is greater than the variance threshold, the controller 110 transmits a Registration message to the BS, for location registration in step 460.

If the velocity measurement is equal to or less than the threshold velocity, or if the variance is equal to or less than the threshold variance, the controller 110 determines whether the location registration timer has expired in step 450. If it has, the controller 110 transmits the Registration message to the BS, for location registration in step 460.

According to the third embodiment of the present invention, even though the velocity of the MS increases, the MS does not register its location when it moves to an area under a similar radio channel environment such as an area in which the distance between the MS and the BS is not changed. On the contrary, the MS registers its location immediately if it does not move fast but it is placed in a bad radio channel environment. Thus, an unnecessary location registration is avoided.

As described above, the location registration period of an MS is controlled adaptively according to the received signal strength and velocity of the MS. The resulting prevention of an unnecessary location registration reduces unnecessary transmission of a Registration message and waste of cell capacity.

While the invention has been shown and described with reference to certain preferred embodiments thereof, it will be understood by those skilled in the art that various changes in form and details may be made therein without departing from the spirit and scope of the invention as defined by the appended claims.

## Claims

1. A location registering method in a mobile station (MS) for communication between the MS and a base station (BS) in a mobile communication system, comprising:

   measuring a strength of a signal received from the BS in a predetermined measurement period;
   comparing the signal strength measurement with at least one predetermined threshold; and
   controlling a location registration period according to a result of the comparing step.

2. The location registering method of claim 1, wherein the controlling step includes:

   if the signal strength measurement is greater than a predetermined first threshold, the location registration period is increased by a first predetermined value, and if the signal strength measurement is less than a predetermined second threshold below the predetermined first threshold, the location registration period is decreased by a second predetermined value.

3. The location registering method of claim 2, wherein if the signal strength measurement is equal to or less than the predetermined first threshold, and equal to or greater than the predetermined second threshold, the location registration period is maintained.

4. The location registering method of claim 1, wherein the signal strength is a C/I (Carrier to Interference ratio) of a pilot channel signal received from the BS.

5. The location registering method of claim 1, wherein the location registration period is set by the BS initially.

6. A location registering method in a mobile station (MS) for communication between the MS and a base station (BS) in a mobile communication system, comprising:

   measuring a velocity of the MS in a predetermined measurement period;
   comparing the velocity measurement with at least one predetermined threshold; and
   controlling a location registration period according to a result of the comparing step.

7. The location registering method of claim 6, wherein the controlling step includes:

   if the velocity measurement is greater than a predetermined first threshold, the location registration period is decreased by a predetermined value, and if the velocity measurement is less than a predetermined second threshold below the predetermined first threshold, the location registration period is increased by the predetermined value .

8. The location registering method of claim 7, wherein if the velocity measurement is equal to or less than the predetermined first threshold, and equal to or greater than the predetermined second threshold, the location registration period is maintained.

9. The location registering method of claim 6, wherein the location registration period is set by the BS initially.

10. A location registering method in a mobile station (MS) for communication between the MS and a base station (BS) in a mobile communication system, comprising:

    repeatedly measuring a strength of a signal received from the BS for a predetermined time period and calculating a variance of signal strengths measured for the predetermined time period;
    measuring a velocity of the MS; and
    registering a location of the MS to the mobile communication system if the velocity is greater than a predetermined threshold velocity and the variance is greater than a predetermined threshold variance.

11. The location registering method of claim 10, further comprising the step of registering the location of the MS to the mobile communication system in a predetermined location registration period if the velocity is equal to or less than the predetermined threshold velocity, or if the variance is equal to or less than the predetermined threshold variance.

12. The location registering method of claim 10, wherein the signal strength is a C/I (Carrier to Interference ratio) of a pilot channel signal received from the BS.

13. The location registering method of claim 10, wherein the MS registers the location to the mobile communication system in a location registration period.

14. A location registering apparatus in a mobile station (MS) for communication between the MS and a base station (BS) in a mobile communication system, comprising:

    a signal strength measurer for measuring a strength of a signal received from the BS;
    a period controller for comparing the signal strength measurement with at least one predetermined threshold and controlling a location registration period according to the comparison result; and
    a controller for registering a location of the MS to the mobile communication system in the location registration period.

15. The location registering apparatus of claim 14, wherein if the signal strength measurement is greater than a predetermined first threshold, the period controller increases the location registration period by a first predetermined value, and if the signal strength measurement is less than a predetermined second threshold below the predetermined first threshold, the period controller decreases the location registration period by a second predetermined value.

16. The location registering apparatus of claim 15, wherein if the signal strength measurement is equal to or less than the predetermined first threshold, and equal to or greater than the predetermined second threshold, the period controller maintains the location registration period.

17. The location registering apparatus of claim 14, wherein the signal strength is a C/I (Carrier to Interference ratio) of a pilot channel signal received from the BS.

18. A location registering apparatus in a mobile station (MS) for communication between the MS and a base station (BS) in a mobile communication system, comprising:

    a velocity measurer for measuring a velocity of the MS;
    a period controller for comparing the velocity measurement with at least one predetermined threshold and controlling a location registration period according to the comparison result; and
    a controller for registering a location of the MS to the mobile communication system in the location registration period.

19. The location registering apparatus of claim 18, wherein if the velocity measurement is greater than a predetermined first threshold, the period controller decreases the location registration period by a first predetermined value, and if the velocity measurement is less than a predetermined second threshold below the predetermined first threshold, the period controller increases the location registration period by a second predetermined value.

20. The location registering apparatus of claim 19, wherein if the velocity measurement is equal to or less than the predetermined first threshold, and equal to or greater than the predetermined second threshold, the period controller maintains the location registration period.

21. A location registering apparatus in a mobile station (MS) for communication between the MS and a base station (BS) in a mobile communication system, comprising:

a signal strength measurer for repeatedly measuring a strength of a signal from the BS for a predetermined time period and calculating a variance of signal strengths measured for the predetermined time period;
a velocity measurer for measuring a velocity of the MS; and
a controller for registering a location of the MS to the mobile communication system if the velocity measurement is greater than a predetermined threshold velocity and the variance is greater than a predetermined threshold variance.

22. The location registering apparatus of claim 21, wherein the controller registers the location of the MS to the mobile communication system in a predetermined location registration period if the velocity measurement is equal to or less than the predetermined threshold velocity, or if the variance is equal to or less than the predetermined threshold variance.

23. The location registering apparatus of claim 21, wherein the signal strength is a C/I (Carrier to Interference ratio) of a pilot channel signal received from the BS.

FIG.1

| Field | Length (bits) |
|---|---|
| PILOT_PN | 9 |
| CONFIG_MSG_SEQ | 6 |
| HSBS_REG_USED | 1 |
| HSBS_REG_TIMER | 0 or 3 |
| NUM_FBSCH | 3 |
| NUM_HSBS_SESSION | 6 |

| NUM_FBSCH occurrences of the following variable length record: | |
|---|---|
| FBSCH_ID | 3 |
| FBSCH_FREQ_INCL | 1 |
| FBSCH_FREQ | 0 or 11 |
| FBSCH_CODE_CHAN | 11 |
| FBSCH_RC | 5 |
| FBSCH_RATE | 4 |
| FBSCH_FRAME_SIZE | 2 |
| FBSCH_FRAME_REP_IND | 1 |

| NUM_HSBS_SESSION occurrences of the following variable length record: | |
|---|---|
| HSBS_ID | 20 |
| NUM_LPM_ENTRIES | 3 |
| NUM_LPM_ENTRIES occurrences of the following variable length record: | |
| FBSCH_ID | 3 |
| BSR_ID | 3 |
| NUM_NGHBR | 6 |
| NUM_NGHBR occurrences of the following variable length record: | |
| NGHBR_PN | 9 |
| NGHBR_HSBS_CONFIG | 3 |
| NGHBR_FBSCH_ID | 0 or 3 |
| NGHBR_FBSCH_FREQ_INCL | 0 or 1 |
| NGHBR_FBSCH_FREQ | 0 or 11 |
| NGHBR_FBSCH_CODE_CHAN_INCL | 0 or 1 |
| NGHBR_FBSCH_CODE_CHAN | 0 or 11 |

FIG.2

EP 1 315 390 A1

START

200
TIME
TO MEASURE?　　NO

YES

MEASURE PILOT
SIGNAL STRENGTH　～210

220
SIGNAL STRENGTH
> Max_E_TH?　　YES

NO

230
SIGNAL STRENGTH
< Min_E_TH?
NO

240
MAINTAIN
REGISTRATION PERIOD

250　YES
DECREASE
REGISTRATION PERIOD

260
INCREASE
REGISTRATION PERIOD

270
TIME
TO REGISTER?
NO

YES

REGISTER LOCATION　～280

FIG.3

```
                          ┌──────────┐
                          │  START   │
                          └────┬─────┘
                               │
        ┌──────────────────────▼──────────────┐
        │                   ╱──300──╲          │
        │              ╱ TIME ╲          NO
        └──────────◄  TO MEASURE? ►──────────────┐
                      ╲         ╱                 │
                       ╲───────╱                  │
                          │ YES                   │
                          ▼                       │
                 ┌──────────────────┐             │
                 │ MEASURE VELOCITY │──310        │
                 └────────┬─────────┘             │
                          │                       │
                     ╱──320──╲                    │
                 ╱  VELOCITY  ╲      YES           │
              ◄  > Max_V_TH?   ►───────────┐      │
                 ╲            ╱             │      │
                  ╲──────────╱             │      │
                       │ NO                │      │
                       ▼                   │      │
         NO       ╱──330──╲                │      │
      ┌──────────◄ VELOCITY ►              │      │
      │           ╲< Min_V_TH?╱            │      │
      │            ╲─────────╱             │      │
      │          340   │ YES  350     360  │      │
      ▼                ▼                   ▼      │
┌──────────────┐ ┌──────────────┐ ┌──────────────┐
│   MAINTAIN   │ │   INCREASE   │ │   DECREASE   │
│REGISTRATION  │ │REGISTRATION  │ │REGISTRATION  │
│   PERIOD     │ │   PERIOD     │ │   PERIOD     │
└──────┬───────┘ └──────┬───────┘ └──────┬───────┘
       └────────────────┼────────────────┘
                        ▼
                   ╱──370──╲
      NO          ╱  TIME   ╲
   ◄─────────────◄ TO REGISTER? ►
                   ╲         ╱
                    ╲───────╱
                        │ YES
                        ▼
              ┌──────────────────┐
              │ REGISTER LOCATION│──380
              └──────────────────┘
```

FIG.4

FIG.5

**European Patent Office**

## EUROPEAN SEARCH REPORT

Application Number

EP 02 02 6349

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| X | EP 0 541 026 A (KOKUSAI ELECTRIC CO LTD ;HITACHI LTD (JP)) 12 May 1993 (1993-05-12) * column 1, line 5 - line 8 * * column 11, line 25 - line 41 * * column 12, line 42 - line 57 * * column 13, line 8 - line 19 * --- | 1-9, 14-20 | H04Q7/38 |
| X | JP 11 298945 A (OKI ELECTRIC IND CO LTD) 29 October 1999 (1999-10-29) * column 3, line 63 - line 66 * * column 5, line 13 - line 49 * * column 5, line 63 - line 64 * * column 6, line 29 - line 67 * -& US 6 330 446 B1 11 December 2001 (2001-12-11) ----- | 6 | |
| | | | TECHNICAL FIELDS SEARCHED (Int.Cl.7) H04Q |

The present search report has been drawn up for all claims

| Place of search | Date of completion of the search | Examiner |
|---|---|---|
| BERLIN | 28 February 2003 | Rothlübbers, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                 EP 02 02 6349

This annex lists the patent family members relating to the patent documents cited in  the above-mentioned European search report.
The members are as contained in the European Patent Office EDP file on
The European Patent Office is in no way liable for these particulars which are merely given for the purpose of information.

28-02-2003

| Patent document cited in search report | | Publication date | Patent family member(s) | | Publication date |
|---|---|---|---|---|---|
| EP  0541026 | A | 12-05-1993 | JP<br>DE<br>DE<br>EP<br>KR<br>US | 5130019 A<br>69228287 D1<br>69228287 T2<br>0541026 A2<br>9603843 B1<br>5379451 A | 25-05-1993<br>11-03-1999<br>24-06-1999<br>12-05-1993<br>22-03-1996<br>03-01-1995 |
| JP 11298945 | A | 29-10-1999 | US | 6330446 B1 | 11-12-2001 |